**Europäisches Patentamt**

(19) **European Patent Office**

**Office européen des brevets**

(11) Veröffentlichungsnummer: **0 022 058**
**B1**

(12) **EUROPÄISCHE PATENTSCHRIFT**

(45) Veröffentlichungstag der Patentschrift:
07.09.83

(51) Int. Cl.³: **A 61 C 13/22**

(21) Anmeldenummer: **80810136.4**

(22) Anmeldetag: **23.04.80**

(54) **Gelenk zur Verbindung von Teil-Zahnprothesen mit dem natürlichen menschlichen Restgebiss.**

(30) Priorität: **12.06.79 CH 5466/79**

(43) Veröffentlichungstag der Anmeldung:
**07.01.81 Patentblatt 81/1**

(45) Bekanntmachung des Hinweises auf die Patenterteilung:
**07.09.83 Patentblatt 83/36**

(84) Benannte Vertragsstaaten:
**AT BE DE FR GB IT**

(56) Entgegenhaltungen:
**CH-A-308 122**
**DE-B-1 416 890**
**DE-B-1 943 932**
**FR-A-1 042 503**
**FR-A-1 104 365**
**FR-A-1 359 823**
**FR-A-1 360 803**
**US-A-3 448 521**

(73) Patentinhaber: **Dalla Bona, Hans, Rousseauweg 9,
CH-2563 Ipsach (CH)**

(72) Erfinder: **Dalla Bona, Hans, Rousseauweg 9,
CH-2563 Ipsach (CH)**

(74) Vertreter: **Steiner, Martin et al, c/o AMMANN
PATENTANWAELTE AG BERN Schwarztorstrasse 31,
CH-3001 Bern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Gelenk zur Verbindung von Teil-Zahnprothesen mit dem natürlichen menschlichen Restgebiß

Die vorliegende Erfindung betrifft ein Gelenk zur Verbindung von Teil-Zahnprothesen mit dem natürlichen menschlichen Restgebiß, gemäß Oberbegriff des Anspruchs 1. Ein Gelenk dieser Art ist in der CH-A-308 122 beschrieben. Es weist verschiedene, dort beschriebene Vorteile auf. Trotzdem aber, dank der Beweglichkeit des Gelenkes nur in einer Ebene eine eingesetzte Feder relativ stark bemessen werden kann, erweist sich doch die Feder in der Praxis oft als zu schwach, um eine wünschbare Verteilung des auf die Prothese wirkenden Kaudruckes auf das unter der Prothese liegende Zahnfleisch einerseits und den Pfeilerzahn anderseits zu bewirken. Bei jeder stärkeren Belastung der Prothese wird die Feder ganz zusammengedrückt, was sich auf deren Lebensdauer nachteilig auswirkt. Ist die Federkraft durch dauernde Deformation stark herabgesetzt oder gar die Feder gebrochen, senkt sich die Prothese unkontrolliert ein und die wichtige Entlastung des unter der Prothese liegenden Zahnfleisches ist nicht mehr gewährleistet.

Aus der FR-A-1 359 823 ist es für ein ähnliches Gelenk bekannt, einen die beiden Gelenkteile durchsetzenden Anschlagstift zur Begrenzung der gegenseitigen Bewegung vorzusehen. In diesem Falle ist zwar eine ins Gelenk eingesetzte Feder gegen Überbeanspruchung geschützt, aber jede Montage und Demontage bedingt ein mühsames Einsetzen bzw. Entfernen des Anschlagstiftes. Die Anschlagkräfte wirken mit einem recht großen Hebelarm auf die Verankerung des einen Gelenkteils und den ausladenden Hals desselben. Gegenseitige Kippbewegungen der Gelenkteile sind durch den Anschlagstift behindert.

Es ist ferner bekannt, einen Einzelzahnersatz auf einem Träger, z. B. einer Prothese, einer Brücke oder einem Stiftzahn, mittels einer im Träger untergebrachten Feder elastisch abzustätzen (DE-B2-1 943 932). Auch hier ist der Weg des Zahnersatzes beim Zusammendrücken der Feder unter dem Kaudruck durch Anschlag des Randes des Zahnersatzes gegen seinen Träger begrenzt. Da jedoch kein Gelenk, sondern eine zentralsymmetrische Kupplung zwischen Zahnersatz und Träger vorhanden ist, ergab sich keine Anregung für eine vom Stande der Technik abweichende Lösung bei Gelenken.

Der Erfindung liegt die Aufgabe zugrunde, bei einem Gelenk der eingangs erwähnten Art bei unverändert einfacher Einbau- und Ausbaumöglichkeit und freier Kippbewegung der Gelenkteile einen Anschlag zur Begrenzung der Relativbewegung der Gelenkteile unter Beiß- oder Kaudruck ohne ungünstige Beanspruchung des Halses des mit dem Kupplungskopf versehenen Gelenkteils zu erreichen. Die erfindungsgemäße Lösung dieser Aufgabe ist im kennzeichnenden Teil des Anspruchs 1 umschrieben.

Die Erfindung wird nun anhand eines in der Zeichnung dargestellten Ausführungsbeispiels näher erläutert.

Fig. 1 zeigt das Gelenk in eingebautem, belastetem Zustand, teilweise im Schnitt, und

Fig. 2 zeigt eine Ansicht von unten auf das Gelenk.

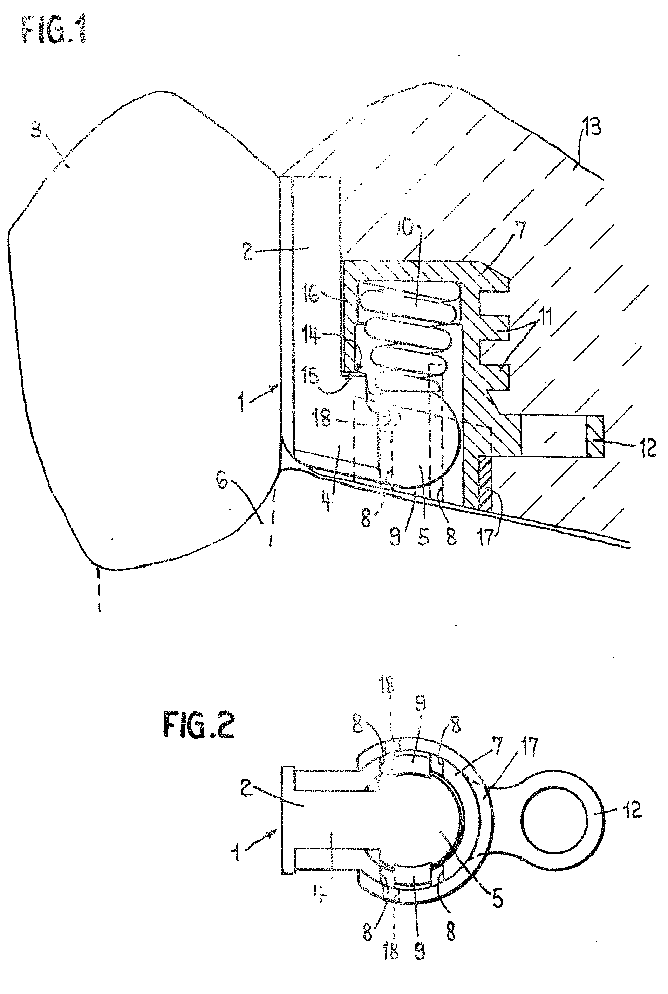

Das Gelenk weist einen ersten Gelenkteil 1 mit einer Schiene 2 T-förmigen Querschnitts auf, die bei eingebautem Zustand nach Fig. 1 mit der Krone oder geeigneten Füllung eines Pfeilerzahnes 3 verlötet ist. Der Gelenkteil 1 weist am unteren Ende einen seitlich ausladenden Hals 4 auf, dessen freies Ende als kugeliger Kupplungskopf 5 ausgebildet ist. Die untere Außenfläche des Halses ist dem Kopf 5 entsprechend konvex gerundet und geht tangential in den Kopf über, so daß keine Absätze und Kanten entstehen. Das untere Ende des Gelenkteils 1, der bei entlasteter Prothese leicht vorstehen und auf das Zahnfleisch 6 aufliegen kann, verursacht somit keine Verletzung oder Reizung des Zahnfleiches. Zahnseide kann an dieser Stelle durchgeführt werden ohne verletzt zu werden oder zu reißen.

Der andere Kupplungsteil ist als Hülse 7 ausgebildet, die oben geschlossen und unten offen ist. Sie weist am unteren offenen Ende durch Schlitze 8 gebildete leicht einwärts gebogene, federnde Lappen 9 auf, die so bemessen sind, daß der kugelige Kopf 5 des Kupplungsteils unter leichter Verformung der Lappen 9 von unten in die Hülse 7 einführbar ist und dann in derselben gehalten ist. In der Hülse 7 ist eine Druckfeder 10 angeordnet, welche die unbelastete Prothese in einer oberen, durch Anliegen an die Lappen 9 an den Kopf 5 bestimmten Ruhelage hält. Die Hülse ist mit Rippen 11 und einem Ring 12 zur Verbesserung ihrer Retention im Prothesenmaterial 13 versehen.

Der Hals 4 greift mit parallelen Seitenflächen durch einen seitlichen Schlitz der Hülse 7, was eine gegenseitige Führung der Gelenkteile derart ergibt, daß sie sich nur in einer Sagitalebene gegenseitig bewegen können. Der Hals 4 bildet oben eine Schulter 14, die zusammen mit der Unterseite 15 der über dem Schlitz liegenden Vorderwand 16 der Hülse einen Anschlag bildet.

Um das untere Ende der Hülse 7 greift eine Weichkunststoffmanchette 17, die im Bereiche des Ansatzes des Rings 12 einen Ausschnitt aufweist und somit beim Anbringen an diesem Ansatz orientiert wird. Die Manchette 17 ist mit der Hülse 7 mittels eines mundbeständigen Klebers verbunden. Sie wird beim Einbau in das Prothesenmaterial 13 eingegossen und weist an den Enden mindestens je ein Loch 18 auf, in welches das Prothesenmaterial eindringen kann, womit die Manchette auch in der Prothese sicher verankert ist. Die Manchette verhindert das Eindringen von Verunreinigungen durch die Schlitze 8 und stellt zugleich die elastische

...eweglichkeit der Lappen 9 im Prothesenmaterial sicher.

Fig. 1 zeigt die Stellung der Teile bei belasteter Prothese. Die Feder 10 ist zusammengedrückt und die Schulter 14 liegt an der Unterseite 15 der Vorderwand 16 der Hülse 7 an. Damit ist das Einsinken der Prothese begrenzt, bevor die Feder 10 vollständig zusammengedrückt ist. Der auf die Prothese wirkende Druck wird damit in der gewünschten optimalen Weise einerseits über den Gelenkteil 1 auf den Pfeilerzahn 3 und andererseits auf das unter der Prothese liegende Zahnfleisch verteilt. Dabei kann natürlich die Prothese auf der nicht mit einem Pfeilerzahn verbundenen Seite etwas tiefer einsinken, was sich in einer leichten Verschwenkung der Hülse 7 um den Kopf 5 des Gelenkteils 1 auswirkt. Diese Schwenkbewegung kann aber nur in einer Ebene erfolgen. Die Unterseite 15 gleitet dabei etwas auf der Schulter 14. Ist die Prothese entlastet, hebt die Feder 10 den Gelenkteil 7 mit der Prothese bis zum Anschlag des Kopfes 5 an die Lappen 9 an, womit die erwünschte Entlastung des unter der Prothese liegenden Zahnfleisches erreicht wird.

Zum Entfernen der Prothese wird dieselbe angehoben, bis die Lappen 9 der Hülse 7 so weit verformt sind, daß sie über den Kopf 5 nach oben abgleiten. Zum Einsetzten der Prothese wird umgekehrt die Hülse 7 auf den Kopf 5 aufgesteckt, wobei ihre Lappen 9 über den Kopf 5 schnappen und damit die Prothese sichern.

Es sind verschiedenen Ausführungsvarianten möglich. Es können z. B. mehr Lappen 9 vorhanden sein als dargestellt. Es können andere Retentionsmittel an der Hülse 7 vorgesehen sein.

**Patentansprüche**

1. Gelenk zur Verbindung von Teil-Zahnprothesen (13) mit dem natürlichen menschlichen Restgebiß, mit zwei Gelenkteilen (1 bzw. 7), die mit einem Pfeilerzahn (3) bzw. mit der Teil-Zahnprothese (13) verbunden werden können, und von welchen der eine als einseitig geschlossene Hülse (7) mit einer seitlichen axialen Führung und der andere als in die Führung greifende Schiene (2) mit einem seitlich in die Hülse ragenden Hals (4) und einem kugeligen Kupplungskopf (5) ausgebildet ist, derart, daß die Kupplungsteile (1, 7) nur in einer Axialebene gegenseitige Kippbewegungen ausführen können, und wobei zwischen dem Kupplungskopf (5) und dem geschlossenen Ende der Hülse (7) Raum für ein federndes Material (10) verbleibt, dadurch gekennzeichnet, daß an der Ansatzstelle des Halses (4) an der Schiene (2) eine Anschlagfläche (14) gebildet ist, die mit einer Anschlagfläche (15) an einem die Führung innen abschließenden Wandteil (16) der Hülse zusammenwirkt, um die axiale Relaitvbewegung der Gelenkteile zu begrenzen, wodurch der Hals (4) und der Kupplungskopf (5) von Anschlagkräften entlastet sind, und die Anschlagflächen (14, 15) aufeinander gleiten können, um eine gegenseitige Kippbewegung der Gelenkteile in der genannten Axialebene zu erlauben.

2. Gelenk nach Anspruch 1, wobei der hülsenartige Gelenkteil (7) am offenen Ende elastisch verformbare, eingebogene Lappen (9) zur Haltung des Kopfes (5) des einen Gelenkteils (1) aufweist, dadurch gekennzeichnet, daß die Lappen (9) von einer Weichkunststoffmanchette (17) umgeben sind.

3. Gelenk nach Anspruch 2, dadurch gekennzeichnet, daß die Weichkunststoffmanchette (17) Löcher (18) aufweist, in welche Prothesenmaterial zur Verankerung der Manchette eindringen können.

4. Gelenk nach einem der Ansprüche 1 bis 3, dadurch gekennzeichnet, daß an den kugeligen Kopf (5) am einen Ende des einen Gelenkteils (1) der Hals (4) mit einer Außenfläche anschließt, die entsprechend dem Kopf konvex gerundet ist und tangential in die Fläche des Kopfes (5) übergeht.

**Claims**

1. Articulator for joining partial dental prostheses (13) and the remainder of natural human teeth together, having two joint members (1, 7) connectable with an anchor tooth (3) and with the partial dental prosthesis (13) respectively, one of said members being a sleeve-like member (7) closed on one side, with an axial guide disposed laterally, the other member being a rail member (2) engaged in the guide with a neck (4) which engages laterally in the sleeve-like member and a spherical coupling head (5), such that the joint members (1, 7) may execute mutual tilting motion in an axial plane only and a cavity for a resilient material (10) being provided between the coupling head (5) and the closed extremity of the sleeve-like member (7), characterized in that in the connecting place of the neck (4) to the rail (2) a stop surfce (14) is provided which cooperates with a stop surface (15) of a wall (16) of the sleeve-like member closing the guide on the inside, to limit the relative motion of the joint members in order to relieve the neck (4) and the head (5) on the impact forces and in that the stop surfaces (14, 15) may slide one upon the other for permitting a mutual tilting motion of the joint members in said axial plane.

2. Articulator according to claim 1, in which said sleeve-like member (7) is provided at its open end with resiliently deformable bent in lugs (9) for retaining the head (5) of one of siad joint members (1), characterized in that the lugs (9) are surrounded by a soft plastic material gaiter (17).

3. Articulator according to claim 2, wherein the soft plastic material gaiter (17) has perforations (18) into which prosthesis material may penetrate to anchor the gaiter.

4. Articulator according to claims 1 to 3, wherein the neck (4) is connected to the spherical head (5) at one end of one of the joint members (1) by an outer surface which is convexly rounded in correspondence with the head and merges tangentially into the surface of the head.

## Revendications

1. Articulation pour joindre des prothèses dentaires partielles (13) avec le reste de la dentition naturelle humaine, avec deux parties de joint (1, 7) susceptibles d'être attachées respectivement à une dent d'ancrage (3) et à une prothèse dentaire partielle (13), l'une desdites parties étant en forme de corps cylindrique (7) fermé d'un côté par un guide axial disposé latéralement, l'autre partie étant formée d'un rail (2) engagé dans le guide, avec un col (4) s'engageant latéralement dans le corps cylindrique et une tête de couplage sphérique (5), de manière que lesdites parties de joint (1, 7) ne peuvent effectuer des mouvements basculants réciproques que dans un plan axial, et un espace pour un matériau élastique (10) étant prévu entre la tête de couplage (5) et l'extrémité fermée du corps cylindrique (7), caractérisé en ce qu'à l'endroit de raccordement du col (4) au rail (2) se trouve une surface de butée (14) coopérant avec une surface de butée (15) d'une paroi (16) du corps cylindrique fermant le guide à l'intérieur, pour limiter le mouvement relatif des parties de joint, afin de décharger le col (4) et la tête de couplage (5) des forces de butée, et en ce que les surfaces de butée (14, 15) peuvent glisser l'une sur l'autre pour permettre un mouvement basculant réciproque des parties de joint dans ledit plan axial.

2. Articulation selon la revendication 1 dans laquelle la partie en forme de corps cylindrique (7) comprend à son extrémité ouverte des languettes (9) déformables élastiquement et recourbées vers l'intérieur pour retenir la tête (5) de l'une des parties (1) dudit joint, caractérisé en ce que les languettes (9) sont entourées d'une manchette (17) en matériau synthétique mou.

3. Articulation selon la revendication 2, caractérisé en ce que la manchette (17) en matériau synthétique mou comprend des ouvertures (18) dans lesquelles du matériau de la prothèse peut pénétrer pour ancrer la manchette.

4. Articulation selon l'une des revendications 1 à 3, caractérisé par le fait que le col (4) se raccorde à la tête sphérique (5) à une extrémité de l'une des parties de joint (1) par une surface convexe en correspondance avec la tête et se réunit tangentiellement à la surface de la tête (5).

FIG.1

FIG.2